# EUROPEAN PATENT APPLICATION

(11) **EP 3 026 298 A1**
(43) Date of publication of application: **01.06.2016**
(21) Application number: 14829800.3
(22) Date of filing: 25.06.2014
(51) Int. Cl.: F16H 55/36, F16D 41/02, F16D 41/06, F16D 41/07, F16D 47/04, F16F 15/123

(54) **PULLEY DEVICE WITH EMBEDDED UNIDIRECTIONAL CLUTCH**

(30) Priority: 25.07.2013 JP 2013154436
(71) Applicant: NSK Ltd., Tokyo 141-8560 (JP)
(72) Inventor: MORI, Hirofumi, Fujisawa-shi Kanagawa 251-8501 (JP)
(74) Representative: Takeuchi, Maya
(86) International application number: PCT/JP2014/066794
(87) International publication number: WO 2015/012053

(57) **Abstract**

The present invention addresses the problem of implementing a pulley device with an embedded unidirectional clutch, with which the influence of auxiliary automobile machinery on a rotary shaft due to fluctuations in the rotation of the engine can be sufficiently reduced. A sleeve (1b) is configured from an inner-diameter-side sleeve (24) and an outer-diameter-side sleeve (25), a unidirectional clutch (3) is provided between the outer-diameter-side sleeve (25) and a pulley (2), and a coiled torsion spring (18a) capable of transmitting torque between the inner-diameter-side sleeve (24) and the outer-diameter-side sleeve (25) is provided between these members (24, 25). When the rotational speed of the pulley (2) becomes slower than the rotational speed of the outer-diameter-side sleeve (25), the inner-diameter-side sleeve (24) and the outer-diameter-side sleeve (25) rotate relative to one another due to the elastic force of the coiled torsion spring (18a), until the elastic force of the coiled torsion spring (18a) is released, after which the unidirectional clutch (3) becomes incapable of transmitting torque between the pulley (2) and the outer-diameter-side sleeve (25).

## Description

### TECHNICAL FIELD

The present invention relates to a pulley device with embedded unidirectional clutch that is used as a driving device for auxiliary automobile machinery such as an alternator or the like.

### BACKGROUND ART

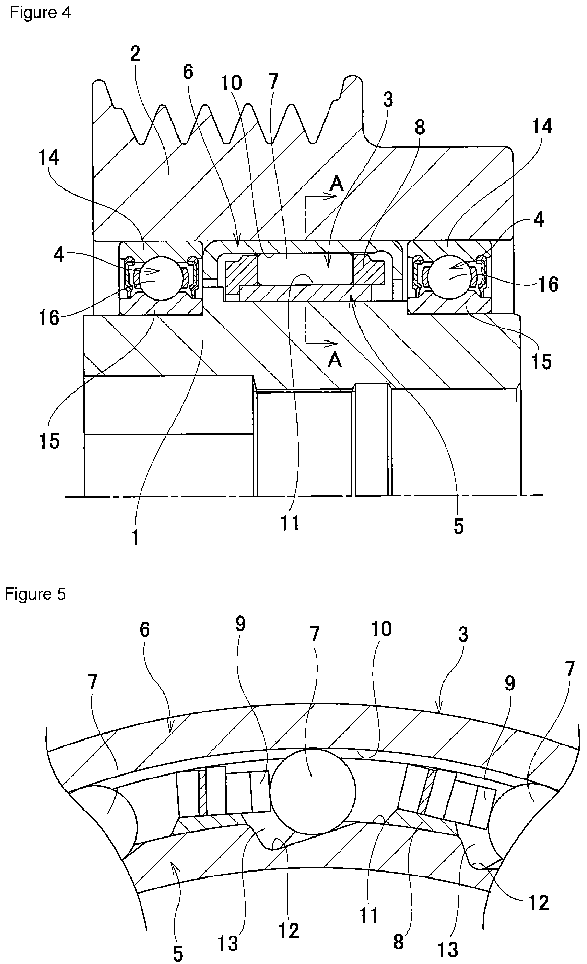

A pulley device equipped with a unidirectional clutch (one-way clutch) is used as a pulley device for driving auxiliary automobile machinery such as an automobile alternator or the like. FIG. 4 and FIG. 5 illustrate an example of a conventional pulley device that is equipped with a unidirectional clutch. This conventional construction has a sleeve 1, a pulley 2 that is arranged so as to be concentric with the sleeve 1, a unidirectional clutch 3 that is arranged between the outer-circumferential surface of the sleeve 1 and the inner-circumferential surface of the pulley 2, and a pair of support bearings 4.

The sleeve 1 is made of steel material, is formed into a substantially cylindrical shape using a forging process, and is externally fitted and fastened to the end section of the rotating shaft of an auxiliary automobile machinery such as an alternator or the like so as to be able to rotate together with this rotating shaft. The pulley 2 is made of steel material and is formed into a substantially cylindrical shape by a forging process or the like, and part of the outer-circumferential surface of the pulley 2 has a wave-shaped cross-sectional shape in the width direction, and is such that part of a continuous belt called a poly V belt can extend around the pulley 2. The unidirectional clutch 3 is arranged in the middle section in the axial direction of a cylindrical space that is located between the outer-circumferential surface of the sleeve 1 and the inner-circumferential surface of the pulley 2, and on both end sections in the axial direction, a pair of support bearings 4 are arranged so as to be on both sides in the axial direction of the unidirectional clutch 3.

The unidirectional clutch 3 has a clutch inner ring 5, a clutch outer ring 6, plural rollers 7, a clutch cage 8, and springs 9, the number of springs 9 being the same as the number of rollers 7, so that, only when the pulley 2 rotates in a specified direction with respect to the sleeve 1, torque can be transmitted between the pulley 2 and the sleeve 1.

The clutch inner ring 5 is formed into a cylindrical shape of plate material of hard metal such as bearing steel or the like or carburized steel such as SCM415 or the like, and is externally fitted and fastened to the middle section in the axial direction of the outer-circumferential surface of the sleeve 1 by an interference fit. The clutch outer ring 6 is formed into a cylindrical shape of plate material of hard metal such as bearing steel or the like or carburized steel such as SCM415 or the like, has inward facing flange sections on both end sections in the axial direction, and is internally fitted and fastened to the middle section in the axial direction of the pulley 2 by an interference fit.

The inner-circumferential surface of the middle section in the axial direction of the clutch outer ring 6 is a cylindrical surface 10, which is an outer-diameter side engaging surface; and the outer-circumferential surface of the clutch inner ring 5 is a cam surface 11, which is an inner-diameter side engaging surface. In other words, plural concave sections 12 called ramp sections are formed on the outer-circumferential surface of the clutch inner ring 5 so as to be uniformly spaced in the circumferential direction. With this kind of construction, the rollers 7, when rotating at high speed, are prevented by centrifugal force from lifting off from the clutch inner ring 5.

The plural rollers 7 and the clutch cage 8 that holds the plural rollers 7 so as to freely roll and move a little in the circumferential direction are arranged between the cam surface 11 and the cylindrical surface 10. The rollers 7 are made of a hard metal such as bearing steel. The clutch cage 8 is made of synthetic resin that is formed into a circular ring shape, and by causing plural convex sections 13 that are provided on the inner-circumferential edge section thereof to engage with concave sections 12 of the cam surface 11, the rotation thereof with respect to the clutch inner ring 5 is prevented. Plural springs 9 that press the rollers 7 in the same circumferential direction (direction toward where the concave sections 12 become shallow) are arranged between the clutch cage 8 and the rollers 7.

The pair of support bearings 4 support radial loads on the pulley 2, while allowing the pulley 2 and sleeve 1 to freely rotate relative to each other. In the example in the figures, deep-groove ball bearings are used as the support bearings 4. In other words, each of the support bearings 4 has: an outer ring 14 that has a deep-groove outer-ring raceway around the inner-circumferential surface thereof, and the outer rings 14 is internally fitted and fastened to the both ends in the axial direction of the pulley 2; an inner ring 15 that has a deep-groove inner-ring raceway around the outer-circumferential surface thereof, and the inner rings 15 is externally fitted and fastened to the both end sections in the axial direction of the sleeve 1; and plural balls 16 that are arranged between the outer-ring raceway and the inner-ring raceway so as to be able to freely roll.

During use, the sleeve 1 is externally fitted and fastened to the end section of the rotating shaft of an alternator or the like, and a continuous belt is placed around the outer-circumferential surface of the pulley 2. The continuous belt extends around a drive-side pulley that is fastened to the end section of a crankshaft of an engine, and is driven by the rotation of the drive-side pulley. In this state, when the running speed (engine speed) is constant or accelerating, the unidirectional clutch 3 is set to a locked state. In other words, the rollers 7 bite into the portions between the cylindrical surface 10 and cam surface 11 where the width in the radial direction is narrow, and a state of strong friction engagement between the cylindrical surface 10 and the cam surface 11 (engaged state of the unidirectional clutch) occurs. As a result, it becomes possible to transmit torque from the pulley 2 to the sleeve 1.

On the other hand, when the running speed of the continuous belt is decelerating, the unidirectional clutch 3 is set to a so-called overrun state in which the rotational speed of the clutch inner ring 5 becomes faster than the rotational speed of the clutch outer ring 6. In other words, the rollers 7 move back into the portions between the cylindrical surface 10 and cam surface 11 where the width in the radial direction is large (state in which engagement of the unidirectional clutch is released). As a result, the pulley 2 and the sleeve 1 are able to rotate relative to each other. With this kind of pulley device with embedded unidirectional clutch, rubbing between the continuous belt and pulley 2 is suppressed even when the rotational speed (angular velocity) of the crankshaft changes from the constant or accelerating state to the decelerating state, and thus it is possible to prevent noise called chattering, or a decrease in the life of the continuous belt due to wear, and it is possible to suppress a decrease in the power generation efficiency of the alternator.

On the other hand, when the running speed of the continuous belt changes from the decelerating state to the accelerating state, the unidirectional clutch 3 switch from the overrun state to the locked state. At the instant of this switching, a strong impact load is applied to the torque transmission members (clutch inner ring 5, clutch outer ring 6, rollers 7) of the unidirectional clutch 3 and the continuous belt that extends around the outer-circumferential surface of the pulley 2. This causes a decrease in the durability of the unidirectional clutch 3 and the continuous belt.

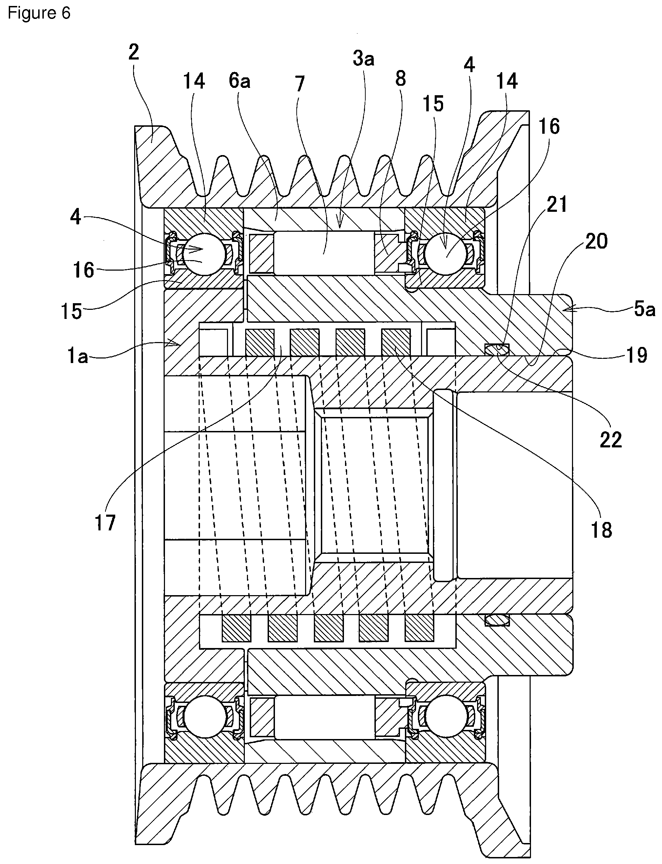

FIG. 6 illustrates a second example of a conventional pulley device with embedded unidirectional clutch as disclosed in JP 2009063040 (A), and has a function that is able to suppress the occurrence of problems such as described above. In this conventional construction, a coiled torsion spring 18 is arranged as a buffer in a ring-shaped elastic body installation space 17 that is formed between the outer-circumferential surface of the sleeve 1a and the inner-circumferential surface of the clutch inner ring 5a of the unidirectional clutch 3a, and construction is such that torque can be transmitted between the sleeve 1a and the clutch inner ring 5a by way of the coiled torsion spring 18.

In this conventional construction, at the instant that the unidirectional clutch 3a switch from the overrun state to the locked state, the impact load is applied to the torque transmission members (clutch inner ring 5, clutch outer ring 6, rollers 7) of the unidirectional clutch 3 and the continuous belt can be absorbed (eased) by elastic deformation (torsion deformation) of the coiled torsion spring 18. Therefore, it is possible to suppress a decrease in the durability of the unidirectional clutch 3a and the continuous belt.

Moreover, in the conventional construction, when the running speed of the continuous belt changes from the constant or accelerating state to the decelerating state, the engaged state of the unidirectional clutch 3a is released due to releasing of the elastic force of the coiled torsion spring 18 before relative rotation between the sleeve 1a and clutch inner ring 5a begins. More specifically, the sleeve-side abutment surface 19, which is the portion near the other end (right end in FIG. 6) in the axial direction of the outer-circumferential surface of the sleeve 1a, and the inner-ring-side abutment surface 20, which is the portion near the other end in the axial direction of the inner-circumferential surface of the clutch inner ring 54a come into sliding contact, and the inner-circumferential surface of the O-ring that is provided in a concave groove 21 that is formed around the entire circumference in the middle section in the axial direction of the inner-ring-side abutment surface 20 comes into sliding contact with the sleeve-side abutment surface 19. With this kind of construction, the rotational torque required for the sleeve 1a to rotate relative to the O-ring 22 (friction force between the sleeve-side abutment surface 19 and the O-ring 22) is greater than the engagement release torque required for releasing the engagement of the unidirectional clutch 3a.

Incidentally, the rotational speed (angular velocity) of the crankshaft of the engine finely pulsates (rotational fluctuation) based on the combustion cycle of the engine. When this kind of rotational fluctuation of the engine is transmitted as is to the rotating shaft of an alternator or the like, this rotational fluctuation causes slipping to occur between the pulley device, which is assembled on the rotating shaft of the alternator, and the continuous belt, and causes repetitive loads on the continuous belt. This causes noise to occur and the life of the continuous belt to decrease, and the rotational torque required to rotate the rotating shaft of the alternator or the like becomes large, and there is a possibility that the fuel efficiency will worsen.

In regard to problems caused by this kind of rotational fluctuation of the engine, the pulley device with embedded unidirectional clutch illustrated in FIG. 6 is such that it is possible to somewhat suppress the effect of rotational fluctuation of an engine on the rotating shaft of a alternator by a buffering action due to elastic deformation of the coiled torsion spring 18. However, in this conventional construction, when the running speed of the continuous belt changes from the constant or accelerating state to the decelerating state due to the rotational fluctuation of the engine, the unidirectional clutch 3a is set to a state in which the unidirectional clutch cannot transmit torque between the pulley 2 and the sleeve 1a (state in which engagement of the unidirectional clutch is released) before relative rotation between the sleeve 1a and clutch inner ring 5a begins due to the release of the elastic force of the tension coil spring 18. Therefore, when switching between the decelerating state and accelerating state in a short period such as during rotational fluctuation of an engine, there is a possibility that the buffering action of the coiled torsion spring 18 will not be sufficiently obtained.

### [Related Literature]

### [Patent Literature]

[Patent Literature 1] JP 2009063040 (A)

### SUMMARY OF INVENTION

### [Problem to be Solved by Invention]

Taking the above situation into consideration, the object of the present invention is to achieve construction of a pulley device with embedded unidirectional clutch that is able to reduce the effect that fluctuation in switching between a decelerating state and an accelerating state in a short period such as in rotational fluctuation of an engine has on a rotating shaft of auxiliary automobile machinery.

### [Means for Solving Problems]

The pulley device with embedded unidirectional clutch of the present invention includes a sleeve, a pulley, a unidirectional clutch and a pair of support bearings. The sleeve is cylindrical shaped and can be fastened to a rotating shaft. The pulley is arranged around the sleeve and is concentric with the sleeve. The unidirectional clutch is provided between the outer-circumferential surface of the sleeve and the inner-circumferential surface of the pulley, and is able to transmit torque between the pulley and the sleeve only when the pulley rotates in a specified direction relative to the sleeve. The pair of support bearings are provided between the outer-circumferential surface of the sleeve and the inner-circumferential surface of the pulley, and make relative rotation between the sleeve and the pulley possible.

Particularly, a feature of the pulley device with embedded unidirectional clutch of the present invention is that by the sleeve having an inner-diameter-side sleeve that is fastened around the rotating shaft, and an outer-diameter-side sleeve that is arranged around the inner-diameter-side sleeve, and that is concentric with and can rotate relative to the inner-diameter-side sleeve, then when the pulley is in a state of rotating relative to the outer-diameter-side sleeve in a direction opposite the specified direction, the rotational torque that is required for the inner-diameter-side sleeve to rotate relative to the outer-diameter-side sleeve is less than the engagement release torque that is required for engagement of the unidirectional clutch to be released.

More specifically, in the pulley device with embedded unidirectional clutch of the present invention, the unidirectional clutch is provided between the outer-circumferential surface of the outer-diameter-side sleeve and the inner-circumferential surface of the pulley, and the pair of support bearings are respectively arranged between the outer-circumferential surface of the inner-diameter-side sleeve and the inner-circumferential surface of the pulley, and between the outer-circumferential surface of the outer-diameter-side sleeve and the inner-circumferential surface of the pulley.

The pulley device with embedded unidirectional clutch of the present invention further includes an elastic member that is provided between the inner-diameter-side sleeve and the outer-diameter-side sleeve, and when elastically deformed due to the relative rotation of these members, torque can be transmitted between these members. Moreover, the pulley device with embedded unidirectional clutch of the present invention is constructed so that when the pulley is in a state of rotating relative to the outer-diameter-side sleeve in a direction opposite the specified direction, the inner-diameter-side sleeve and the outer-diameter-side sleeve rotate relative to each other due to the elastic force of the elastic member until the elastic force of the elastic member is released.

More specifically, a bearing (rolling bearing or sliding bearing) is provided between the inner-circumferential surface of the outer-diameter-side sleeve and the outer-circumferential surface of the inner-diameter-side sleeve.

The elastic member can be a coiled torsion spring. In that case, an outer-diameter-side engagement section that is capable of engaging with one end of the coiled torsion spring is provided in the outer-diameter-side sleeve so that relative displacement with the one end of the coiled torsion spring is not possible in the circumferential direction, and an inner-diameter-side engagement section that is capable of engaging with the other end of the coiled torsion spring is provided in the inner-diameter-side sleeve so that relative displacement with the other end of the coiled torsion spring is not possible in the circumferential direction.

The present invention can be suitably applied to a pulley device with embedded unidirectional clutch in which the unidirectional clutch includes: a cylindrical surface that is directly formed on the inner-circumferential surface of the pulley, or is provided on the inner-circumferential surface of a clutch outer ring that is fitted in the pulley with an interference fit; a cam surface that is formed directly on the outer-circumferential surface of the outer-diameter-side sleeve, or formed on the outer-circumferential surface of a clutch inner ring that is fitted around the outer-circumferential surface of the outer-diameter-side sleeve with an interference fit; and plural locking members (rollers or sprags) that are provided between the cam surface and the cylindrical surface.

### [Effect of Invention]

With the pulley device with embedded unidirectional clutch of the present invention, it is possible to sufficiently decrease the effect that fluctuation (pulsation), such as rotational fluctuation of an engine, that switches between a decelerating state and an accelerating state in a short period has on the rotating shaft of auxiliary automobile machinery. In other words, an elastic member is provided between the inner-diameter-side sleeve and the outer-diameter-side sleeve, and when elastically deformed due to relative rotation between these members, torque can be transmitted between these members. Therefore, the buffering action of the elastic member is able to keep the effect that rotational fluctuation has on the rotating shaft of auxiliary automobile machinery small when the running speed of a continuous belt that is place around the pulley changes from a decelerating state to an accelerating state due to rotational fluctuation of the engine.

Furthermore, when the running speed of a continuous belt changes from a constant or accelerating state to a decelerating state due to rotation fluctuation of the engine, and the pulley changes to a state of relative rotation with respect to the outer-diameter-side sleeve in a direction opposite a specified direction, first, the inner-diameter-side sleeve and the outer-diameter-side sleeve rotate relative to each other due to the elastic force of the elastic member until the elastic force of the elastic member is released. After that, the unidirectional clutch is in a state in which torque cannot be transmitted between the pulley and the outer-diameter-side sleeve. Therefore, when the unidirectional clutch switches from an overrun state to a locked state, the elastic force of the elastic member is not in a maintained state. Consequently, the buffering action of the elastic member can be sufficiently obtained, and it is possible to keep the effect that rotational fluctuation of the engine has on the rotating shaft of auxiliary automobile machinery small. As a result, by keeping the rate of change in fluctuation (angular acceleration) of the rotational speed (angular velocity) of the rotating shaft of auxiliary automobile machinery small, and by keeping the rotational torque that is expressed by the product of the angular acceleration and the inertia of the auxiliary automobile machinery small, it is possible to improve the fuel consumption of the automobile.

### BRIEF DESCRIPTION OF DRAWINGS

FIG. 1 illustrates an example of an embodiment of the present invention, and is a partial cross-sectional view of a pulley device with embedded unidirectional clutch.
FIG. 2 is an exploded perspective view of the pulley device with embedded unidirectional clutch in FIG. 1.
FIG. 3A is a perspective view illustrating the state as seen from one direction in the axial direction of an inner-diameter-side sleeve that has been removed from the pulley device with embedded unidirectional clutch in FIG. 1; and FIG. 3B is a perspective view as seen from the other direction in the axial direction of an outer-diameter-side sleeve that has been removed.
FIG. 4 is a partial cross-sectional view illustrating a pulley device with embedded unidirectional clutch of a first example of conventional construction.
FIG. 5 illustrates just the removed unidirectional clutch, and is an enlarged cross-sectional view of section A-A in FIG. 4.
FIG. 6 is a cross-sectional view illustrating a pulley device with embedded unidirectional clutch of a second example of conventional construction.

### MODES FOR CARRYING OUT INVENTION

### [Example]

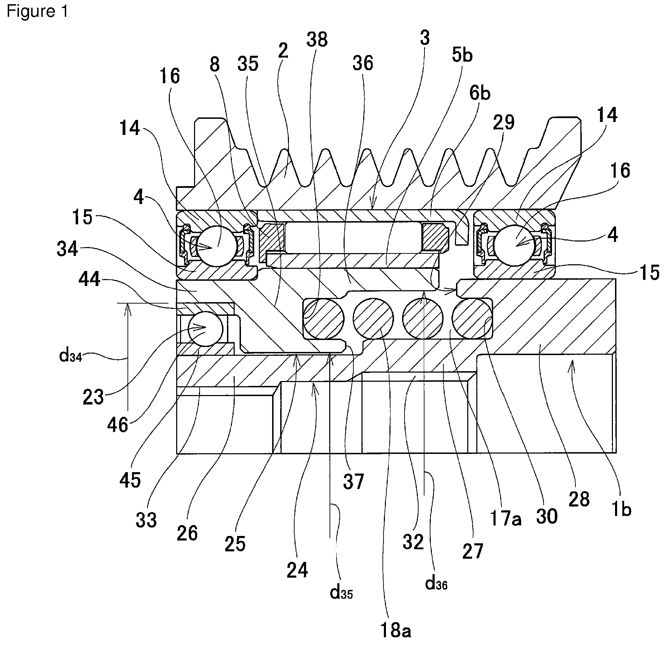

FIG. 1 to FIG. 3B illustrate an example of an embodiment of the present invention. Features of this example are the construction of the sleeve 1b of the pulley device with embedded unidirectional clutch, and devising the assembled construction of the sleeve 1b. Construction other than these features is the same as the construction of a conventional pulley device with embedded unidirectional clutch. Therefore, the same reference numbers will be used for parts that are equivalent to those of the conventional construction, and the following explanation will center on the features of this example.

The pulley device with embedded unidirectional clutch of this example, includes a sleeve 1b, a pulley 2, a unidirectional clutch 3, a coiled torsion spring 18a that corresponds to an elastic member, a pair of support bearings 4, and a ball bearing 23. The sleeve 1b is a cylindrical member that includes an inner-diameter-side sleeve 24, and an outer-diameter-side sleeve 25.

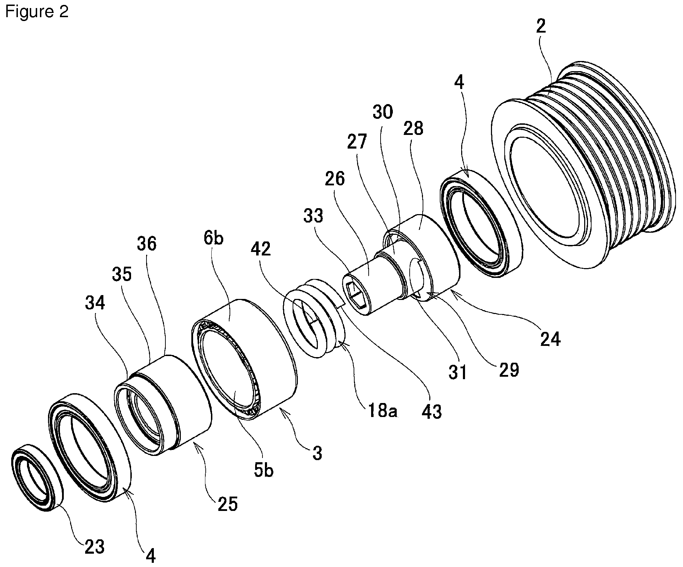

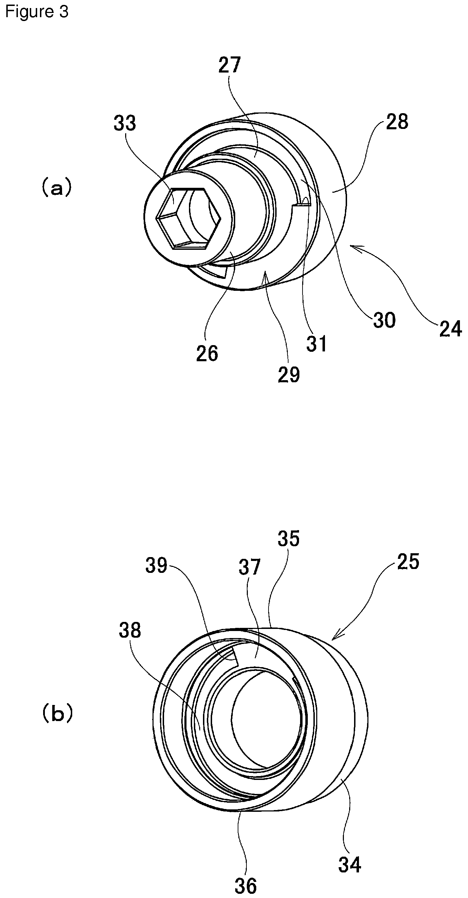

The inner-diameter-side sleeve 24 is able to be externally fitted and fastened to the rotating shaft of auxiliary automobile machinery such as an alternator, and is a stepped cylindrical member that includes in order from one-end side in the axial direction (left side in FIG. 1 and FIG. 2, and front end in FIG. 3) a small-diameter cylindrical section 26, an intermediate-diameter cylindrical section 27, and a large-diameter cylindrical section 28. The outer-circumferential surface of the intermediate-diameter cylindrical section 27 and the outer-circumferential surface of the large-diameter cylindrical section 28 are continuous by way of an inner-diameter-side stepped section 29, and an inner-diameter-side spiral groove 30, the depth dimension in the axial direction thereof becoming larger while advancing in the clockwise direction in FIG. 3, is formed in the range of approximately 3/4 in the circumferential direction of the inner-diameter-side stepped section 29. Of the inner-diameter-side spiral groove 30, the end surface in the circumferential direction on the side where the depth dimension in the axial direction becomes the greatest is taken to be an inner-diameter-side engagement section 31 that comes in contact with the other end surface 43 of the coiled torsion spring 18a.

A female screw section 32 that is capable of screwing over a male screw section that is provided on the tip-end section of the rotating shaft of the auxiliary automobile machinery is provided in the middle section in the axial direction of the inner-circumferential surface of the inner-diameter-side sleeve 24. Moreover, a concave hole 33 having a non-circular cross-sectional shape such as a hexagonal hole for inserting a tool when installing the pulley device with embedded unidirectional clutch in the auxiliary automobile machinery is provided on the portion near one end in the axial direction of the inner-circumferential surface of the inner-diameter-side sleeve 24.

The outer-diameter-side sleeve 25 is arranged around the inner-diameter-side sleeve 24 so as to be concentric with the inner-diameter-side sleeve 24, and so as to be able to rotate relative to the inner-diameter-side sleeve 24; and is a cylindrical shaped member that includes a first cylindrical section 34 that is in a portion near one end in the axial direction, a second cylindrical section that is in the middle in the axial direction, and a third cylindrical section that is in a portion near the other end in the axial direction. The second cylindrical section 35 is such that the inner-diameter dimension d₃₅ thereof is less than the inner-diameter dimensions d₃₄, d₃₆ of the first cylindrical section 34 and the third cylindrical section 36 (d₃₅ < d₃₄, d₃₅ < d₃₆).

The inner-circumferential surface of the second cylindrical section 35 and the inner-circumferential surface of the third cylindrical section 36 are connected by way of an outer-diameter-side stepped section 37 that is provided in a state facing the inner-diameter-side stepped section 29 in the axial direction, and an outer-diameter-side spiral groove 38, the depth dimension in the axial direction thereof becoming larger when advancing in the clockwise direction in FIG. 3, is formed in the range of approximately 3/4 in the circumferential direction of the outer-diameter-side stepped section 37. The end surface in the circumferential direction on the side of the outer-diameter-side spiral groove 38 where the depth dimension in the axial direction is the largest is taken to be an outer-diameter-side engagement section 39 that comes in contact with one end surface 42 of the coiled torsion spring 18a.

The unidirectional clutch 3 includes: a clutch outer ring 6b that is internally fitted and fastened the middle section in the axial direction of the inner circumferential surface of the pulley 2 with an interference fit; a clutch inner ring 5b that is externally fitted and fastened to the portion that extends from the outer-circumferential surface of the second cylindrical section 35 of the outer-diameter-side sleeve 25 to the outer-circumferential surface of the third cylindrical section 36 with an interference fit; plural rollers 7; a clutch cage 8 and the same number of springs 9 as rollers 7. The inner-circumferential surface of the middle section in the axial direction of the clutch outer ring 6 is a cylindrical surface 10 that functions as an outer-diameter-side engagement surface, and the outer-circumferential surface of the clutch inner ring 5 is a cam surface 11 that functions as the inner-diameter-side engagement surface (see FIG. 5). The clutch cage 8 is arranged between the cam surface 11 and the cylindrical surface 10, and holds the plural rollers 7 so as to be able to freely roll and move a little in the circumferential direction. With this kind of construction, the unidirectional clutch 3 is arranged concentric with the outer-diameter-side sleeve 24 and inner-diameter-side sleeve 25, and is able to transmit torque between the pulley 2 and the outer-diameter-side sleeve 25 only when the pulley 2 rotates in a specified direction relative to the outer-diameter-side sleeve 25.

The coiled torsion spring 18a, which is an elastic member, is arranged between the inner-diameter-side sleeve 24 and the outer-diameter-side sleeve 25. More specifically, when the inner-diameter-side sleeve 24 and the outer-diameter-side sleeve 25 are in the assembled state, the coiled torsion spring 18a is arranged in a ring-shaped elastic member installation space 17a that is formed by the outer-circumferential surface of the intermediate-diameter cylindrical section 27 of the inner-diameter-side sleeve 24 and the inner-diameter-side stepped section 29 and the inner-circumferential surface of the third cylindrical section 36 of the outer-diameter-side sleeve 25 and the outer-diameter-side stepped section 37. In this kind of assembled state, the coiled torsion spring 18a is such that one end surface 42 thereof comes in contact with the outer-diameter-side engagement section 39 of the outer-diameter-side spiral groove 38, and the other end surface 43 thereof comes in contact with the inner-diameter-side engagement section 31 of the inner-diameter-side spiral groove 30. In other words, the one end of the coiled torsion spring 18a and the outer-diameter-side engagement section engage so that relative displacement in the circumferential direction is not possible, and the other end of the coiled torsion spring 18a and the inner-diameter-side engagement section engage so that relative displacement in the circumferential direction is not possible. Therefore, when the inner-diameter-side sleeve 24 and the outer-diameter-side sleeve 25 relatively rotate in a specified direction and in a direction such that the coiled torsion spring 18a is distorted, the coiled torsion spring 18a is able to transmit torque between these members 24, 25.

The construction for the engagement between the inner-diameter-side sleeve 24 and the outer-diameter-side sleeve 25 and the coiled torsion spring 18a is not limited to the construction of this example. In other words, it is also possible to employ various kinds of construction for engagement that make it possible for torque to be transmitted from the inner-diameter-side sleeve 24 or outer-diameter-side sleeve 25 to the coiled torsion spring 18a in a torsional direction.

Of the pair of support bearings 4, one support bearing 4 is arranged between the outer-circumferential surface of the first cylindrical section 34 of the outer-diameter-side sleeve 25 and the portion near the one end in the axial direction of the circumferential surface of the pulley 2 so that the pulley 2 freely rotates relative to the outer-diameter-side sleeve 25. The other support bearing 4 is provided between the outer-circumferential surface of the large-diameter cylindrical section 28 of the inner-diameters-side sleeve 24 and the portion near the other end in the axial direction of the inner-circumferential surface of the pulley 2 so that the pulley 2 freely rotates relative to the inner-diameter-side sleeve 24.

In this example, the ball bearing 23 is provided between the inner-diameter-side sleeve 24 and the outer-diameter-side sleeve 25. In the example in the figures, a deep-groove ball bearing is used as the ball bearing 23. In other words, the ball bearing 23 includes: an outer ring 44 that has a deep-groove outer-ring raceway around the inner-circumferential surface thereof, and that is internally fitted and fastened to the inner-circumferential surface of the first cylindrical section 34 of the outer-diameter-side sleeve 25; an inner ring 45 that has a deep-groove inner-ring raceway around the outer-circumferential surface thereof, and that is externally fitted and fastened to a portion near the one end in the axial direction of the outer-circumferential surface of the small-diameter cylindrical section 26 of the inner-diameter-side sleeve 24; and plural balls 46 that are provided between the outer-ring raceway of the outer ring 44 and the inner-ring raceway of the inner ring 45 so as to roll freely. By providing this kind of ball bearing 23 between the inner-diameter-side sleeve 24 and outer-diameter-side sleeve 25, it is possible for these members 24, 25 to rotate relative to each other.

When the ball bearing 23 is assembled between the inner-diameter-side sleeve 24 and outer-diameter-side sleeve 25, the other half section in the axial direction of the outer-circumferential surface of the small-diameter cylindrical section 26 of the inner-diameter-side sleeve 24 and the inner-circumferential surface of the second cylindrical section 35 of the outer-diameter-side sleeve 25 face each other around the entire circumference by way of a small gap.

By providing the ball bearing 23 between the inner-diameter-side sleeve 24 and outer-diameter-side sleeve 25, the rotational torque required for relative rotation between these members 24, 25 becomes less than the rotational torque required for releasing the engagement of the unidirectional clutch 3 (engagement release torque). Therefore, when the running speed of the continuous belt fluctuates from a constant or accelerating state to a decelerating state, and the pulley 2 rotates relative to the outer-diameter-side sleeve 25 in a direction opposite the specified direction, first, the inner-diameter-side sleeve 24 rotates relative to the outer-diameter-side sleeve 25 due to the elastic force of the coiled torsion spring 18a until the elastic force of the coiled torsion spring 18a is completely released. After that, the unidirectional clutch 3 is in a state in which torque cannot be transmitted between the pulley 2 and the outer-diameter-side sleeve 25 (state in which engagement of the unidirectional clutch 3 is released). Instead of a ball bearing 23, it is also possible to use various kinds of rolling bearings such as a cylindrical roller bearing, a sliding bearing, or other member that allows relative rotation between the inner-diameter-side sleeve 24 and outer-diameter-side sleeve 25.

In the pulley device with embedded unidirectional clutch of this example, by providing a coiled torsion spring 18a, the buffering action due to elastic deformation of the coiled torsion spring 18a is able to keep the effect that rotational fluctuation of the engine has on the rotating shaft of auxiliary automobile machinery small when there is a tendency for the running speed of the continuous belt to change from a decelerating state to an accelerating state due to rotational fluctuation of the engine that switches between a decelerating state and accelerating state in a short period.

Furthermore, in this example, when the running speed of the continuous belt changes from a constant or accelerating state to a decelerating state, and the pulley 2 rotates relative to the outer-diameter-side sleeve 25 in a direction opposite the specified direction, the inner-diameter-side sleeve 24 rotates relative to the outer-diameter-side sleeve 25 until the elastic force of the coiled torsion spring 18a is released, after which the unidirectional clutch 3 is in a state in which torque cannot be transmitted between the pulley 2 and the outer-diameter-side sleeve 25 (state in which engagement of the unidirectional clutch 3 is released). Therefore, when the unidirectional clutch 3 is further switched from the overrun state to the locked state, the unidirectional clutch 3 is not in a state in which the elastic force of the coiled torsion spring 18a is maintained (elastically deformed state). Consequently, in this example, the buffering action of the coiled torsion spring 18a can be sufficiently obtained, and it is possible to keep the effect that the rotational fluctuation of the engine has on the rotating shaft of the auxiliary automobile machinery small. As a result, it is possible to keep the rate of change of the fluctuation of the rotational speed (angular velocity) of the rotating shaft of the auxiliary automobile machinery small, and it is possible to keep the rotational torque, which is expressed as the product of this angular velocity and the inertia of the auxiliary automobile machinery, small.

In this example, the ball bearing 23 is provided between the inner-diameter-side sleeve 24 and the outer-diameter-side sleeve 25. By doing so, it is possible to sufficiently maintain the concentricity of the inner-diameter-side sleeve 24 and outer-diameter-side sleeve 25, and the concentricity of the inner-diameter-side sleeve 24 and the pulley 2. As a result, during operation the rollers 7 of the unidirectional clutch 3 are prevented from becoming skewed, and when the unidirectional clutch is engaged, a localized increase in the surface pressure at the areas of contact between the outer-circumferential surface of inner-circumferential surface of the inner-diameter-side sleeve 24 and the rolling surfaces of the rollers 7 is prevented.

### [Industrial Applicability]

Due to the need for downsizing of engines, there is a trend to use engines having a small number of cylinders (engines having 4 cylinders or less). The smaller the number of cylinders an engine has, the greater the width of rotational fluctuation (amplitude) due to the combustion cycle of the engine becomes. The present invention can be applied to engines having various numbers of cylinders, however, by applying the invention to an engine having a small number of cylinders, the effect of the invention can be suitably exhibited. Moreover, the present invention can also be favorably applied to diesel engines having a high compression ratio. In this way, the pulley device with embedded unidirectional clutch of the present invention can be widely applied as a driving device for various kinds of auxiliary automobile machinery.

### [Explanation of Reference Numbers]

- 1, 1a, 1b: Sleeve
- 2: Pulley
- 3, 3a: Unidirectional clutch
- 4: Rolling bearing
- 5, 5a, 5b: Clutch inner ring
- 6, 6a, 6b: Clutch outer ring
- 7: Roller
- 8: Clutch cage
- 9: Spring
- 10: Cylindrical surface
- 11: Cam surface
- 12: Concave section
- 13: Convex section
- 14: Outer ring
- 15: Inner ring
- 16: Balls
- 17, 17a: Elastic member installation space
- 18, 18a: Coiled torsion spring
- 19: Sleeve-side abutment
- 20: Inner-ring-side abutment
- 21: Concave groove
- 22: O-ring
- 23: Ball bearing
- 24: Inner-diameter-side sleeve
- 25: Outer-diameter-side sleeve
- 26: Small-diameter cylindrical section
- 27: Intermediate-diameter cylindrical section
- 28: Large-diameter cylindrical section
- 29: Inner-diameter-side stepped section
- 30: Inner-diameter-side spiral groove
- 31: Inner-diameter-side engagement section
- 32: Female screw section
- 33: Concave hole
- 34: First cylindrical section
- 35: Second cylindrical section
- 36: Third cylindrical section
- 37: Outer-diameter-side stepped section
- 38: Outer-diameter-side spiral groove
- 39: Outer-diameter-side engagement section
- 40: Cylindrical surface
- 41: Cam surface
- 42: One end surface in the circumferential direction
- 43: Other end surface in the circumferential direction
- 44: Outer ring
- 45: Inner ring
- 46: Ball

## Claims

1. A pulley device with embedded unidirectional clutch, comprising:
a sleeve capable of being fastened to a rotating shaft;
a pulley arranged around the sleeve and being concentric with the sleeve;
a unidirectional clutch provided between the outer-circumferential surface of the sleeve and the inner-circumferential surface of the pulley, and transmitting torque between the pulley and the sleeve only when the pulley rotates in a specified direction relative to the sleeve; and
a pair of support bearings provided between the outer-circumferential surface of the sleeve and the inner-circumferential surface of the pulley, and making possible relative rotation between the sleeve and the pulley; wherein
the sleeve comprises an inner-diameter-side sleeve fastened around the rotating shaft, and an outer-diameter-side sleeve arranged around the inner-diameter-side sleeve so as to be concentric with and rotate relative to the inner-diameter-side sleeve; and
when the pulley is in a state of rotating relative to the outer-diameter-side sleeve in a direction opposite the specified direction, the rotational torque that is required for the inner-diameter-side sleeve to rotate relative to the outer-diameter-side sleeve is less than the engagement release torque that is required for engagement of the unidirectional clutch to be released.

2. A pulley device with embedded unidirectional clutch, comprising:
a sleeve capable of being fastened to a rotating shaft;
a pulley arranged around the sleeve and being concentric with the sleeve;
a unidirectional clutch provided between the outer-circumferential surface of the sleeve and the inner-circumferential surface of the pulley, and transmitting torque between the pulley and the sleeve only when the pulley rotates in a specified direction relative to the sleeve; and
a pair of support bearings provided between the outer-circumferential surface of the sleeve and the inner-circumferential surface of the pulley, and making possible relative rotation between the sleeve and the pulley; wherein
the sleeve comprises an inner-diameter-side sleeve fastened around the rotating shaft, and an outer-diameter-side sleeve arranged around the inner-diameter-side sleeve so as to be concentric with and rotate relative to the inner-diameter-side sleeve;
the unidirectional clutch is provided between the outer-circumferential surface of the outer-diameter-side sleeve and the inner-circumferential surface of the pulley;
the pair of support bearings are respectively arranged between the outer-circumferential surface of the inner-diameter-side sleeve and the inner-circumferential surface of the pulley, and between the outer-circumferential surface of the outer-diameter-side sleeve and the inner-circumferential surface of the pulley;
an elastic member is further provided between the inner-diameter-side sleeve and the outer-diameter-side sleeve, and when elastically deformed due to the relative rotation of these members, torque can be transmitted between these members; and
when the pulley is in a state of rotating relative to the outer-diameter-side sleeve in a direction opposite the specified direction, the inner-diameter-side sleeve and the outer-diameter-side sleeve rotate relative to each other due to the elastic force of the elastic member until the elastic force of the elastic member is released.

3. The pulley device with embedded unidirectional clutch according to Claim 2, wherein a bearing is provided between the inner-circumferential surface of the outer-diameter-side sleeve and the outer-circumferential surface of the inner-diameter-side sleeve.

4. The pulley device with embedded unidirectional clutch according to Claim 2 or Claim 3, wherein
the elastic member is a coiled torsion spring; and
an outer-diameter-side engagement section that is capable of engaging with one end of the coiled torsion spring is provided in the outer-diameter-side sleeve, and an inner-diameter-side engagement section that is capable of engaging with the other end of the coiled torsion spring is provided in the inner-diameter-side sleeve.

5. The pulley device with embedded unidirectional clutch according to any one of the Claims 1 to 4, wherein
the unidirectional clutch comprises:
a cylindrical surface that is the inner-circumferential surface of the pulley, or is provided on the inner-circumferential surface of a clutch outer ring that is fitted in the pulley with an interference fit;
a cam surface that is formed on the outer-circumferential surface of the outer-diameter-side sleeve, or formed on the outer-circumferential surface of a clutch inner ring that is fitted around the outer-circumferential surface of the outer-diameter-side sleeve with an interference fit; and
plural locking members that are provided between the cam surface and the cylindrical surface.
